# EUROPÄISCHE PATENTSCHRIFT

(11) **EP 0 817 936 B1**
(45) Veröffentlichungstag und Bekanntmachung des Hinweises auf die Patenterteilung: **23.02.2000**
(21) Anmeldenummer: 96908008.4
(22) Anmeldetag: 29.03.1996
(51) Int. Cl.: F16L 55/165, E03F 3/06

(54) **VERFAHREN UND VORRICHTUNG ZUM ZIEHEN EINES IM ERDREICH VERLEGTEN ODER ZU VERLEGENDEN ROHRES**
PROCESS AND DEVICE FOR PULLING A PIPE LAID OR TO BE LAID IN THE GROUND
PROCEDE ET DISPOSITIF DE TRACTION D'UN TUYAU POSE OU A POSER DANS LE SOL

(30) Priorität: 31.03.1995 DE 19513181
(43) Veröffentlichungstag der Anmeldung: 14.01.1998
(73) Patentinhaber: Schwert, Siegfried, 14165 Berlin (DE)
(72) Erfinder: Schwert, Siegfried, 14165 Berlin (DE)
(74) Vertreter: Pfenning, Meinig & Partner
(86) Internationale Anmeldenummer: DE9600595
(87) Internationale Veröffentlichungsnummer: WO9630690

(56) Entgegenhaltungen:
- EP-A- 0 493 645
- DE-C- 3 733 463
- DE-C- 3 912 728
- US-A- 5 205 671
- US-A- 5 439 320

## Beschreibung

Die Erfindung betrifft ein Verfahren gemäß dem Oberbegriff des Anspruchs 1 sowie eine Vorrichtung zur Durchführung des Verfahrens gemäß dem Oberbegriff des Anspruchs 13.

Aus der DE 37 33 463 Cl ist ein Verfahren zum Auswechseln im Erdreich verlegter Rohre bekannt, bei dem im Bereich zwischen einer Einziehbaugrube und einer Zielbaugrube ein altes Rohr entfernt und ein neues Rohr an dessen Stelle eingezogen werden. Hierbei werden durch eine gemeinsame Ziehvorrichtung das alte Rohr zur Zielbaugrube gezogen und in dieser zerbrochen und das neue Rohr dem alten Rohr folgend aus der Einziehbaugrube bis zur Zielbaugrube hin gezogen. Die Ziehvorrichtung greift am in Ziehrichtung hinteren Ende des neuen Rohres an, wobei das alte und das neue Rohr an den aneinandergrenzenden Enden über einen die zwischen ihnen auftretenden Kräfte übertragenen Adapter formschlüssig miteinander verbunden werden. Ein Zugelement wie eine aus mehreren durch Schraubkupplungen miteinander verbundenen kurzen Einzelstangen bestehende Zugstange wird durch die beiden Rohre geschoben und mit dem hinteren Ende des neuen Rohres einerseits und der Ziehvorrichtung andererseits in Eingriff gebracht. Die Zugstange wird dann zusammen mit den beiden Rohren schrittweise zur Zielbaugrube hin gezogen, wobei die Ziehvorrichtung bei jedem Schritt einen Vorwärtshub, bei dem die volle Zugkraft auf die Zugstange einwirkt, und einen Rückwärtshub, bei dem die Zugstange entlastet ist, ausführt. Wenn jedoch lange Rohre oder aus mehreren Rohren zusammengesetzte Rohrleitungen ausgewechselt werden, können erhebliche Zugkräfte erforderlich sein. Bei diesen kann die elastische Dehnung des Zugelements beim Vorwärtshub so groß sein, daß diese einem erheblichen Teil, gegebenenfalls deutlich mehr als der Hälfte der Hublänge entspricht. Da bei jedem Schritt das Zugelement belastet und entlastet wird, das heißt elastisch gedehnt wird und sich anschließend wieder um dieselbe Strecke zusammenzieht, entspricht der tatsächliche Vorschub der Rohre bei einem Schritt der Hublänge der Ziehvorrichtung abzüglich der jeweiligen elastischen Dehnung. Hierdurch kann der Vorschub der Rohre bei einem Schritt erheblich geringer als die Hublänge der Ziehvorrichtung sein, so daß der Wirkungsgrad der Ziehvorrichtung entsprechend herabgesetzt wird.

Es ist demgemäß die Aufgabe der vorliegenden Erfindung, ein Verfahren zum Ziehen eines im Erdreich verlegten und/oder eines im Erdreich zu verlegenden Rohres zu einer unterhalb der Erdoberfläche liegenden, von dieser aus zugänglichen Grube hin, in welcher eine mit einem Zugelement in Eingriff stehende Ziehvorrichtung angeordnet ist, wobei das Zugelement durch das Rohr hindurchgeführt ist und hinter dessen in Ziehrichtung hinterem Ende an diesem angreift oder das Zugelement am in Ziehrichtung vorderen Ende an dem Rohr angreift und mit dem Rohr von der Ziehvorrichtung schrittweise zur Grube hin gezogen wird, derart, daß die Ziehvorrichtung bei jedem Schritt einen Vorwärts- und einen Rückwärtshub ausführt, anzugeben, bei dem der Vorschub des Rohres bei einem Schritt der vollen Hublänge der Ziehvorrichtung entspricht, so daß selbst bei hohen Zugkräften eine Herabsetzung des Wirkungsgrades nicht auftritt.

Diese Aufgabe wird erfindungsgemäß durch das im kennzeichnenden Teil des Anspruchs 1 angegebene Merkmal bzw. durch eine Vorrichtung gemäß Anspruch 13 gelöst. Vorteilhafte Weiterbildungen des erfindungsgemäßen Verfahrens und bevorzugte Vorrichtungen zu dessen Durchführung ergeben sich aus den Unteransprüchen.

Dadurch, daß das Zugelement während des Rückwärtshubes unter einer Spannung gehalten wird, die seiner elastischen Dehnung während des Vorwärtshubes entspricht, wird das Zugelement ständig im Zustand der elastischen Dehnung gehalten, so daß der Wechsel von Dehnung und Zusammenziehung bei jedem Schritt entfällt. Da sich die Ziehvorrichtung an der zur Ziehstrecke weisenden, ein Widerlager bildenden Wand der Grube abstützt, die bei einem ständigen Wechsel von Be- und Entlastung durch Lockerung des Erdreichs destabilisiert werden kann, hat das erfindungsgemäße Verfahren auch den Vorteil, daß das Widerlager durch die Dauerbeanspruchung besser stabilisiert wird.

Eine Vorrichtung zur Durchführung dieses Verfahrens mit einem elastisch dehnbaren Zugelement, das durch das Rohr hindurchgeführt ist und an dessen in Ziehrichtung hinterem Ende mit diesem in in Ziehrichtung wirkendem Eingriff ist oder das mit dem Rohr an dessen in Ziehrichtung vorderem Ende in in Ziehrichtung wirkendem Eingriff ist, und einer in der Grube angeordneten Ziehvorrichtung, die mit dem in Ziehrichtung vorderen Ende des Zugelements in in Ziehrichtung wirkendem Eingriff ist, wobei die Ziehvorrichtung eine schrittweise arbeitende Vorrichtung mit einem Vorwärts- und einem Rückwärtshub ist, ist derart ausgebildet, daß die Ziehvorrichtung mit einem Zugglied, das während des Vorwärtshubes mit dem Zugelement in Eingriff ist, und einem Halteglied, das während des Rückwärtshubes mit dem Zugelement in Eingriff ist, versehen ist.

Die Erfindung wird im folgenden anhand von in den Figuren dargestellten Ausführungsbeispielen näher erläutert. Es zeigen:
- Fig. 1: eine schematische Darstellung eines ersten Ausführungsbeispiels der Ziehvorrichtung,
- Fig. 2: eine Ansicht einer Zieh- oder Haltegabel,
- Fig. 3: die Ziehgabel und den Spaltkegel mit ihrer Führung für die Hubbewegung in der Draufsicht,
- Fig. 4: das Abdrehprisma für die Entkopplung der einzelnen Stangenelemente einer Zugstange,
- Fig. 5: eine Klemmvorrichtung für den Eingriff zwischen der Ziehvorrichtung und einer Zugstange in einer Schnittdarstellung nach einem zweiten Ausführungsbeispiel,
- Fig. 6: die Ansicht der Klemmvorrichtung nach Fig. 5 in Richtung A,
- Fig. 7: eine Vorrichtung zur gegenüber der Ziehvorrichtung beweglichen Lagerung der Widerlagerplatte, und
- Fig. 8: eine abgewinkelte bzw. gekröpfte Widerlagerplatte.

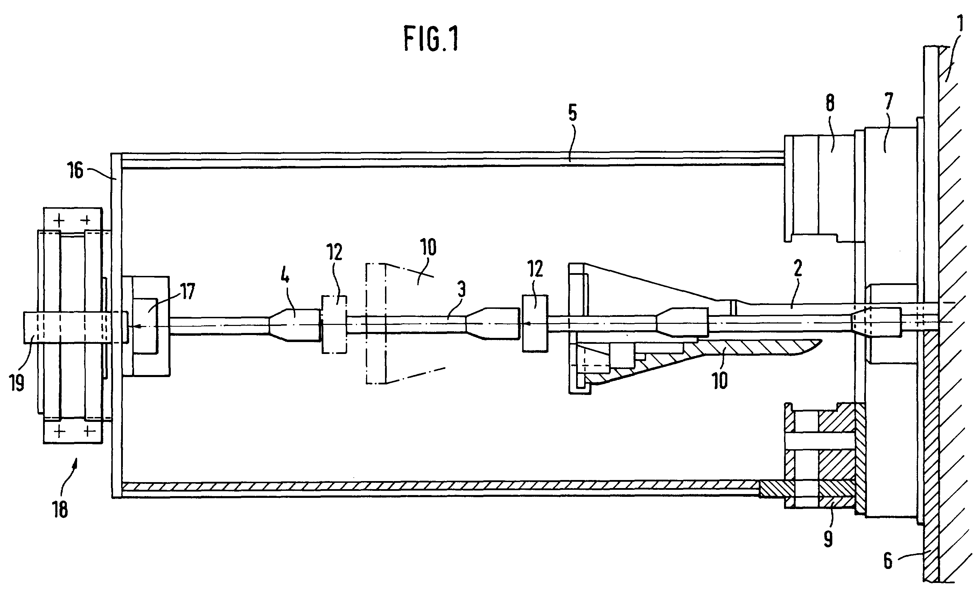

Die in Fig. 1 gezeigte Ziehvorrichtung befindet sich in einer sogenannten Zielbaugrube, von der nur die das Widerlager beim Ziehvorgang bildende Erdwand 1 dargestellt ist. In dieser Erdwand 1 mündet ein Durchgang durch das Erdreich, in welchem ein herauszuziehendes Rohr 2 aufgenommen ist, von dem in Fig. 1 nur die obere Hälfte wiedergegeben ist. Durch das Rohr 2 ist eine Zugstange 3 geführt, die beispielsweise mittels einer Ankerplatte hinter das in Ziehrichtung hintere Ende des Rohres 2 greift, so daß zur Zielbaugrube gerichtete Zugkräfte von der Zugstange 3 auf das Rohr 2 übertragen werden. Das Rohr 2 kann aus einem herauszuziehenden und einem nachfolgenden einzuziehenden Rohr bestehen, die über einen Adapter miteinander gekoppelt sind. Dabei kann die Zugstange 3 am Adapter angreifen, wobei das alte Rohr vom Adapter herausgeschoben wird und das mit dem Adapter fest verbundene neue Rohr eingezogen wird. Ein im Adapter befestigtes Sicherungsgestänge ist durch das neue Rohr geführt und am hinteren Ende dieses Rohres mit einer das Rohrende übergreifenden Sicherungsplatte verbunden, so daß im neuen Rohr vorhandene Muffenverbindungen vor einem Auseinanderziehen geschützt sind.

Der Adapter ist auf die Abmessungen der Rohre abgestimmt und wird bei einer Durchmesservergrößerung als Aufweitkegel ausgebildet. Da hierbei auch der gegenüber dem Rohrdurchmesser größere Durchmesser der Verbindungsmuffen berücksichtigt werden muß, besteht zwischen dem Rohr und dem Erdreich ein Spalt. Zur Stützung des Erdreichs bzw. zur Stabilisierung der Rohrtrasse kann daher vorzugsweise eine thixotrope Flüssigkeit unter Druck in den Spalt eingeführt werden und diesen vollständig ausfüllen. Die Flüssigkeit dient sowohl als Stützmittel als auch als Schmiermittel für den Ziehvorgang.

Die Zugstange 3 ist aus einer größeren Anzahl kurzer Stangenelemente gebildet, die durch nicht gezeigte Koppelmuffen, die auf die aneinanderstoßenden Enden jeweils zweier benachbarter Stangenelemente aufgeschraubt werden, miteinander verbunden sind. Die Zugstange 3 trägt weiterhin in vorgegebenen gegenseitigen Abständen Haltemuffen 4, mit deren Hilfe beim Vorwärtshub das Rohr 2 um die Hublänge aus dem Erdreich herausgezogen wird und beim Rückwärtshub die Zugstange 3 unter der durch deren elastische Dehnung bewirkten Spannung gehalten wird.

Die Ziehvorrichtung weist einen starren Rahmen 5 auf, an dessen der Erdwand 1 zugewandten Seite sich eine Widerlager- oder Brillenplatte 6 befindet. An einer auf diese aufgesetzte Verstärkungsplatte 7 ist eine Zentriervorrichtung für das Rohr 2 mit einer oberen Klemmzange 8 und einer unteren Klemmzange 9 angebracht. Die beiden Klemmzangen 8 und 9 sind senkrecht in der Weise verschiebbar, daß zunächst die obere Klemmzange heruntergefahren wird, bis sie sich in einem Abstand entsprechend dem halben Durchmesser des Rohres 2 oberhalb der Mittellinie der Ziehvorrichtung befindet. Anschließend wird die untere Klemmzange 9 nach oben gefahren, bis das Rohr 2 fest eingeklemmt ist. Dieses ist nun genau zentriert, so daß der nachfolgend beschriebene Spaltkegel 10 genau in dieses eingefahren werden kann, ohne gegen die vordere Bruchkante des Rohres 2 zu stoßen.

Der Spaltkegel 10, dessen untere Hälfte in Fig. 1 im Schnitt dargestellt ist, weist eine mittlere axiale Bohrung auf, durch die die Zugstange 3 mit den aufgesetzten Koppelmuffen und Haltemuffen 4 hindurchgeführt wird. Der Spaltkegel 10 ist in Ziehrichtung auf zwei Führungsschienen 11 verschiebbar gelagert und wird durch einen nicht gezeigten Antrieb bei einem Vorwärtshub mit der Zugstange 3 und dem Rohr 2 um eine Hublänge in Ziehrichtung bewegt und bei einem Rückwärtshub gegenüber der stillstehenden Zugstange 3 und dem Rohr 2 um eine Hublänge entgegen der Ziehrichtung bewegt, wobei er in das offene Bruchende des zentrierten Rohres 2 einfährt und dieses weiter spaltet.

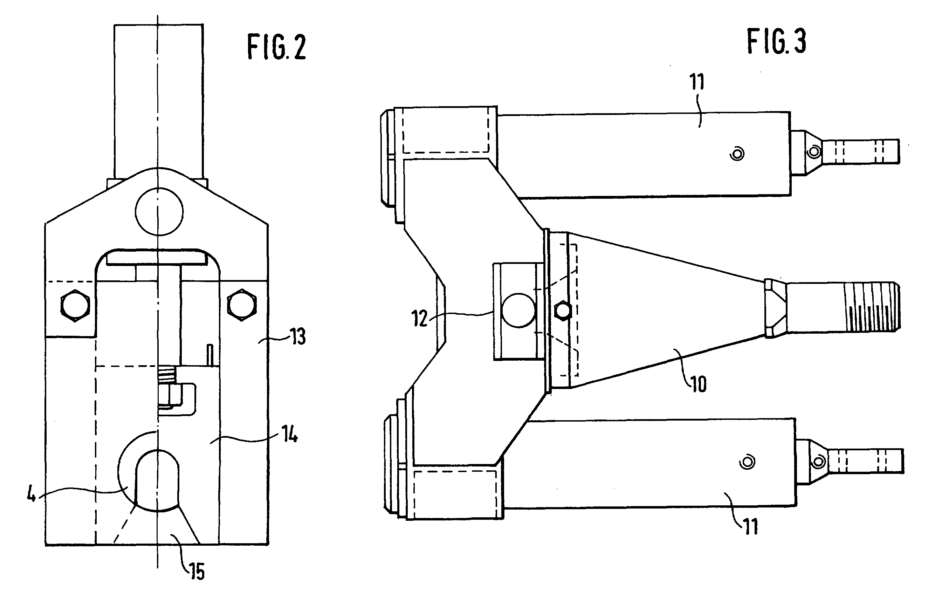

Mit dem Spaltkegel 10 ist eine Ziehgabel 12 fest verbunden, so daß diese die gleichen Bewegungen in bzw. entgegen der Ziehrichtung ausführt wie der Spaltkegel 10. Die Ziehgabel 12 ist in Fig. 2 in der Vorderansicht gezeigt. Sie weist zwei feststehende Schenkel 13 auf, zwischen denen eine Platte vorzugsweise hydraulisch auf- und abwärtsbewegbar gelagert ist. An ihrer Unterseite ist die Platte 14 mit einem Einschnitt 15 versehen, dessen Größe so gewählt ist, daß er die Zugstange 3 aufnehmen kann, nicht jedoch die Haltemuffen 4. In ihrer oberen Stellung befindet sich daher die Platte 14 so oberhalb der Zugstange 3, daß zwischen diesen eine freie Bewegung in bzw. entgegen der Ziehrichtung erfolgen kann, die nicht durch die Haltemuffen 4 beeinträchtigt wird, während die Platte 14 in ihrer unteren Stellung über die Zustange 3 greift und zwischen die Haltemuffen 4 gelangt, so daß eine Bewegung zwischen diesen in bzw. entgegen der Ziehrichtung durch den Eingriff zwischen der Platte 14 und den Haltemuffen 4 beschränkt ist.

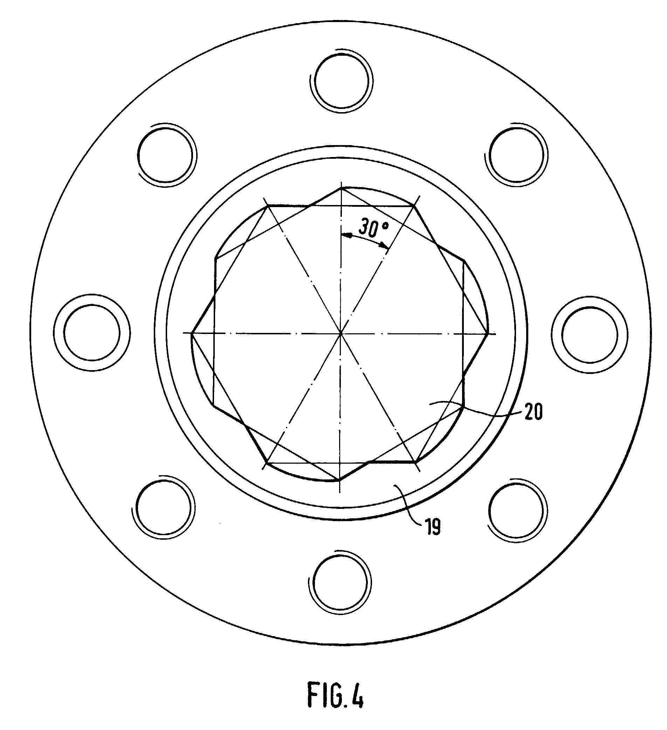

An einer Platte 16, die den Rahmen 5 am in Ziehrichtung vorderen Ende abschließt, ist eine Haltegabel 17 fest angebracht, die den gleichen Aufbau wie die Ziehgabel 12 hat mit der Ausnahme, daß die Platte der Haltegabel 17 zwar ebenfalls auf- und abwärtsbewegbar ist, die Haltegabel 17 selbst jedoch in bzw. entgegen der Ziehrichtung nicht verschoben werden kann. Auf der in bezug auf die Haltegabel 17 entgegengesetzten Seite der Platte 16 ist an dieser eine Abdrehvorrichtung 18 befestigt, die ein konzentrisch zur Zugstange 3 angeordnetes, drehbar antreibbares Abdrehprisma 19 trägt. Dieses ist in Fig. 4 in der Vorderansicht dargestellt. Das Abdrehprisma 19 weist einen mittleren Durchgang 20 auf, durch den die Zugstange 3 selbst und auch die auf dieser befestigten Haltemuffen 4 hindurchtreten können. Die die einzelnen Stangenelemente der Zugstange 3 verbindenden Koppelmuffen haben eine Sechskant-Außenfläche und die Wand des Durchgangs 20 ist in Form der Innenwand eines Sechskant-Ringschlüssels ausgebildet, so daß die Koppelmuffen zwar bei richtiger Drehstellung in das Abdrehprisma 19 eingeschoben, jedoch nur in einem Winkel von maximal 30° gegenüber diesem verdreht werden können. Bei einem Ziehvorgang wird die vorderste Koppelmuffe der Zugstange 3 zum Abdrehprisma 19 hingefahren und, wenn sich die Flanken von Koppelmuffe und Abdrehprisma 19 nicht decken, das Abdrehprisma 19 leicht gedreht, bis die Koppelmuffe in dieses eintreten kann. Dieser Vorgang wird dadurch erleichtert, daß ein Spiel von 30° zwischen ihnen besteht. Wenn die Koppelmuffe vollständig in das Abdrehprisma 19 eingetreten ist, wird der Ziehvorgang unterbrochen oder er ist so abgestimmt, daß der Vorwärtshub gerade beendet ist, und dann wird durch Drehen des Abdrehprismas 19 die Koppelmuffe von den beiden Enden der Stangenelemente abgeschraubt, so daß das vorderste Stangenelement von der Zugstange 3 getrennt wird. Es ist möglich, die Haltemuffen 4 und die Koppelmuffen zu kombinieren, das heißt zumindest einen Teil der Haltemuffen 4 auch zum Verbinden der einzelnen Stabelemente zu verwenden, wobei diese Haltemuffen eine Sechskant-Außenfläche haben müssen.

Dieser automatische Abdrehvorgang ist aus Sicherheitsgründen empfehlenswert, da sich während des gesamten Ziehvorganges in der Zielbaugrube kein Personal aufhalten sollte. Da die Zugstange 3 auch während des Rückwärtshubes der Ziehvorrichtung unter Spannung gehalten wird, ist die Unfallgefahr bei einem manuellen Abdrehen der Stangenelemente zu groß.

Der Ziehvorgang läuft in folgender Weise ab: Nachdem die Zugstange 3 durch das Rohr 2 geschoben und mit dem Rohrende in Eingriff gebracht wurde, wird die Ziehgabel 12 mit dem Spaltkegel 10 in ihre in Ziehrichtung hintere Stellung (die ausgezogene Stellung in Fig. 1) gebracht, wobei die Platte 14 der Ziehgabel 12 in der angehobenen Stellung ist. Die Platte 14 wird dann abgesenkt und die Ziehgabel 12 führt mit dem Spaltkegel 10 einen Vorwärtshub aus, so daß diese in die in Fig. 1 strichpunktiert angedeutete Stellung gelangen. Dabei stößt die Platte 14 gegen die vor ihr liegende Haltemuffe 4, so daß über diese die Zugstange 3 und das Rohr 2 entsprechend weit aus dem Erdreich herausgezogen werden. Die Abstände zwischen den Haltemuffen 4 sind derart, daß die bisher in der oberen Stellung befindliche und nun heruntergelassene Platte der Haltegabel 17 direkt hinter die vorhergehende Haltemuffe 4 greift. Die Platte 14 der Ziehgabel 12 kann nun angehoben werden, ohne daß die elastisch gedehnte, jetzt von der Haltegabel 17 gehaltene Zugstange 3 sich zusammenziehen kann. Die Ziehgabel 12 und der Spaltkegel 10 werden dann wieder in ihre hintere Stellung gefahren, wobei der Spaltkegel 10 in das zentrierte Rohr 2 eintaucht und dieses spaltet. Die Platte 14 der Ziehgabel 12 wird wieder heruntergefahren, wobei sie mit dem Vorwärtshub unmittelbar hinter eine Haltemuffe 4 gelangt, so daß der Vorwärtshub voll ausgenutzt werden kann. Wenn die Platte 14 der Ziehgabel 12 heruntergefahren ist und die Zugstange 3 hält, kann die Platte der Haltegabel 17 hochgefahren werden und anschließend der nächste Vorwärtshub durchgeführt werden. Auf diese Weise wird der Zugstab 3 nur am Anfang des Ziehvorganges einmal elastisch gedehnt und die elastische Dehnung während des gesamten Ziehvorganges aufrechterhalten. Die einzelnen Abdrehvorgänge durch das Abdrehprisma 19 und das zentrische Einklemmen des Rohres 2 durch die Klemmzangen 8 und 9 werden mit den einzelnen Ziehschritten zeitlich koordiniert.

Die Verschiebung der Ziehgabel 12 und des Spaltkegels 10 in und entgegen der Ziehrichtung erfolgt vorzugsweise mittels eines hydraulischen Antriebs, bei dem eine verstellbare Hydraulikpumpe mit einem lastabhängigen Förderstrom verwendet wird. Dies erlaubt höhere Antriebsgeschwindigkeiten bei geringeren Belastungen, das heißt insbesondere bei dem nahezu lastfreien Rückwärtshub sowie auch beim Vorwärtshub, nachdem das Rohr 2 in Bewegung geraten ist, da die Reibung dann wesentlich geringer ist als beim Anziehen des stillstehenden Rohres 2.

Es ist jedoch auch möglich, auf die automatische Abdrehvorrichtung zu verzichten und den Abdrehvorgang manuell durchzuführen. Da hierzu jedoch sich das Personal in der Zielbaugrube aufhalten muß, sollte die Zugstange während des Abdrehens aus Sicherheitsgründen nicht unter Spannung gehalten werden. Da das Abdrehen eines Stangenelements jedoch jeweils erst nach mehreren, beispielsweise drei oder vier Vorwärtshüben erfolgt, braucht die Zugstange auch jeweils nur nach mehreren Vorwärtshüben entlastet zu werden, während sie nach den anderen Vorwärtshüben unter Spannung gehalten wird. Die Vorteile des erfindungsgemäßen Verfahrens bleiben somit im wesentlichen erhalten.

Das Zugelement braucht auch nicht ausschließlich als Zugstange ausgebildet zu sein, sondern kann beispielsweise auch als Kette, Seil oder zugfester Schlauch verwendet werden. Dies hätte den Vorteil, daß ein Abdrehen nicht erforderlich ist.

Werden Rohre mit kleinem Durchmesser, zum Beispiel weniger als 150 mm herausgezogen, dann ist es schwierig, da das Zugelement den Rohrquerschnitt zu einem großen Teil ausfüllt, den Spaltkegel in das Rohr einzuführen. In diesem Fall empfiehlt es sich, eine von außen wirkende Zerkleinerungsvorrichtung mit zwei radial aufeinander zu bewegbaren Preßbacken zu verwenden, zwischen denen das Rohr zerdrückt wird.

Besteht das herauszuziehende Rohr aus Stahl, dann kann es nicht in der vorbeschriebenen Weise zerkleinert werden, sondern muß zerschnitten werden. Hierfür ist eine thermische Schneidvorrichtung mit Plasmabrennern vorteilhaft. Diese sind vorzugsweise an einem axial feststehenden, das Rohr umgebenden Drehkranz befestigt. Während des Vorwärtshubes wird das Rohr in Längsrichtung zerschnitten und nach einem oder mehreren Vorwärtshüben wird der Drehkranz gedreht, wobei das Rohr in Umfangsrichtung zerschnitten wird. Vor dem Zerschneiden wird eine keramikbeschichtete Hülse in den abzuschneidenden Teil des Rohres eingeführt, die das Zugelement umgibt und einen thermischen sowie mechanischen Schutz für dieses darstellt. Trägt das Rohr eine Außenbeschichtung beispielsweise aus Bitumen oder Teer, dann muß diese vor dem Zerschneiden an den Schnittstellen entfernt werden. Geeignet hierfür sind Schleifscheiben, die in vorgegebener räumlicher Zuordnung zu den Plasmabrennern gehalten werden.

Insbesondere bei asbesthaltigen Rohren empfiehlt es sich, die Zerkleinerungsvorrichtung mit einer Spülvorrichtung zu versehen, so daß der beim Zerkleinern entstehende Staub durch die Spülflüssigkeit gebunden werden kann und nicht durch die Luft gewirbelt wird.

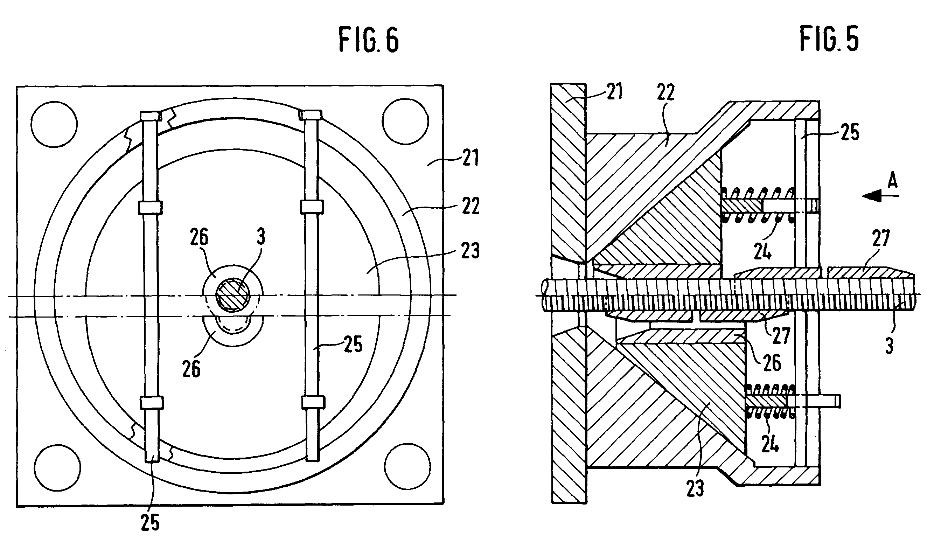

Die Fign. 5 und 6 zeigen ein anderes Ausführungsbeispiel für die Verbindung zwischen Zugstange 3 und Ziehvorrichtung zum Übertragen der Zugkräfte. Die Verbindung wird hierbei mittels einer Klemmvorrichtung hergestellt. Es ist jeweils eine Klemmvorrichtung als Zugglied und als Halteglied vorgesehen, wobei die als Zugglied dienende Klemmvorrichtung axial einen Vorwärts- und Rückwärtshub ausführt, während die als Halteglied dienende Klemmvorrichtung axial feststeht. Bei dieser Art der Verbindung entfallen gegenüber dem ersten Ausführungsbeispiel die Rastglieder auf der Zugstange und der hydraulische Antrieb zum Heben und Senken der Ziehgabel und der Haltegabel.

Die für das Zugglied und das Halteglied identisch ausgebildeten Klemmvorrichtungen weisen eine Befestigungsplatte 21 auf, die bei dem Halteglied axial fest am Rahmen 5 verankert ist und die bei dem Zugglied an einer Traverse befestigt ist, die auf den Führungsschienen 11 den Vorwärts- und Rückwärtshub durchführt. An der Befestigungsplatte 21 ist ein Block 22 mit sich zur Befestigungsplatte 21 hin verjüngender kegelförmiger Öffnung befestigt. In die Öffnung ist ein dieser in seiner Neigung angepaßter, aus mindestens zwei getrennten Segmenten bestehender Klemmkegel 23 eingesetzt. Federn 24, die sich am anderen Ende an Haltestangen 25 abstützen, drücken den Klemmkegel 23 in die Öffnung in Anlage an den Block 22.

Der Klemmkegel 23 enthält eine mittlere Bohrung und ist in dieser mit Greifbacken 26 versehen, die fest in dem Klemmkegel 23 verbunden sind. Zwischen den Greifbacken 26 hindurch wird die Zugstange 3 geführt. Die Zugstange 3 weist auf der Außenseite ein aufgewalztes Gewinde auf, das mit dem Innengewinde einer Koppelmuffe 27 in Eingriff treten kann, so daß über diese einzelne Stangenelemente miteinander verbunden werden können. Die Greifbacken 26 sind auf der Innenseite mit einer komplementären Profilierung versehen, so daß, wenn die Greifbacken 26 mit der Zugstange 3 in Eingriff treten, große Zugkräfte zwischen diesen übertragen werden können, ohne daß eine Relativbewegung zwischen ihnen auftritt.

Wenn die als Zugglied dienende Klemmvorrichtung in Fig. 5 während eines Vorwärtshubes entgegen dem Pfeil A bewegt wird, wird der Klemmkegel 23 von der Zugstange 3 zunächst festgehalten, wodurch er noch tiefer in die Öffnung des Blocks 22 und damit auch stärker gegen die Zugstange 3 gedrückt wird. Wenn der Eingriff zwischen diesen so fest ist, daß die zum Heraus- bzw. Einziehen des Rohres 2 erforderliche Zugkraft übertragen werden kann, wird die Zugstange 3 von der Klemmvorrichtung mitgenommen. Diesen Zustand zeigt jeweils die obere Hälfte der Figuren 5 und 6. Die jeweils untere Hälfte dieser Figuren zeigt den Zustand während des Rückwärtshubes. Bei diesem bleibt die Zugstange 3 stehen, während die Klemmvorrichtung in Richtung des Pfeils A bewegt wird. Durch die Relativbewegung zwischen diesen wird der Klemmkegel gegen die Kraft der Federn 24 etwas aus der Öffnung des Blocks 22 herausbewegt, so daß die Greifbacken 26 lose auf der Zugstange 3 schleifen. Da die Koppelmuffen 27 auf beiden Seiten und die Greifbacken 26 auf einer Seite verjüngend angeschrägt sind, gleiten diese, wenn sie aufeinanderstoßen, zunächst auf ihren schrägen Flächen, wobei der Klemmkegel 23 noch weiter aus der Öffnung des Blocks 22 herausgedrückt wird, bis ihre zur Zugstange 3 parallelen Oberflächen aufeinander schleifen. Auf diese Weise kann die Klemmvorrichtung den Rückwärtshub ausführen, während die Zugstange 3, durch die andere, als Halteglied dienende Klemmvorrichtung gehalten wird.

Die als Halteglied dienende Klemmvorrichtung ist in der gleichen Richtung angeordnet wie die als Zugglied dienende Klemmvorrichtung. Während des Vorwärtshubes bewegt sich die Zugstange 3 entgegen dem Pfeil A. Hierbei wird der Klemmkeil 23 durch die Relativbewegung zwischen der Zugstange 3 und der feststehenden Klemmvorrichtung aus der Öffnung des Blocks 22 herausbewegt, so daß die Greifbacken 26 auf der Zugstange 3 schleifen. Während des Rückwärtshubes bewegt sich das Zugglied in Richtung des Pfeiles A. Die von dem Zugglied freigegebene Zugstange 3 versucht aufgrund ihrer Dehnung, dieser Bewegung zu folgen. Hierbei drückt sie jedoch den Klemmkeil 23 der als Halteglied dienenden Klemmvorrichtung in die Öffnung des Blocks 22, so daß ein Eingriff zwischen den Greifbacken 26 und der Zugstange 3 erfolgt, der nach einer Bewegung der Zugstange 3 von etwa 2 bis 3 cm so fest ist, daß die Zugstange 3 unter der durch ihre Dehnung verursachten Spannung gehalten werden kann, während die als Zugglied dienende Klemmvorrichtung den Rückwärtshub ausführt.

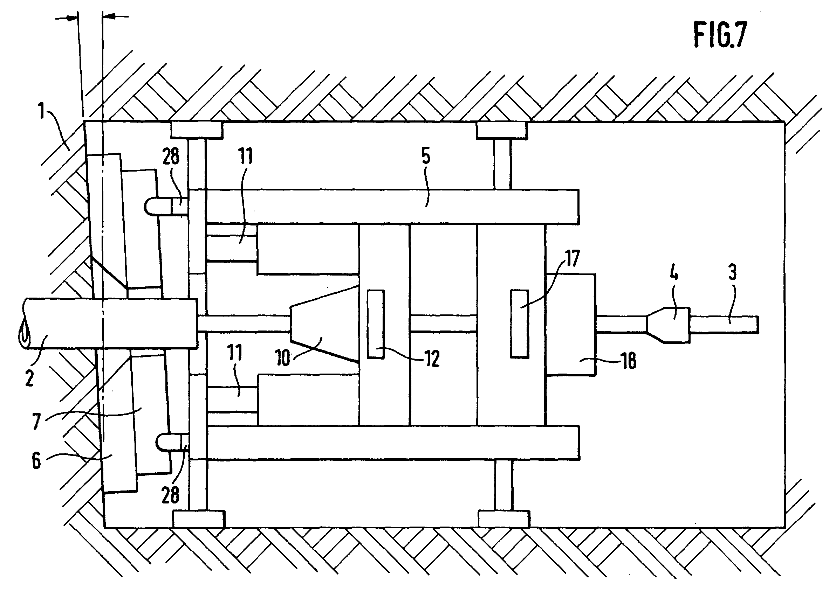

Fig. 7 zeigt die Draufsicht auf eine Zielbaugrube mit einer darin installierten Ziehvorrichtung. Diese ist in gleicher Weise ausgebildet wie die Ziehvorrichtung nach Fig. 1, jedoch mit der Besonderheit, daß die sich an der Erdwand 1 abstützende Widerlagerplatte 6 nicht starr mit dem Rahmen 5 verbunden ist, sondern über hydraulisch vorgespannte Zylinder 28. Es sind insgesamt vier dieser Zylinder 28 vorgesehen, deren ausfahrbare Kolben mit der Verstärkungsplatte 7 verbunden sind.

Da häufig der Fall eintritt, daß die Erdwand 1 durch die auf sie ausgeübten Zugkräfte ungleichmäßig nachgibt, kann es, da die Erdwand 1 nicht mehr senkrecht zur Rohrachse verläuft, zu Verformungen der Längsträger des Rahmens 5 kommen. Da weiterhin die Rohrachse und die Ziehachse auseinanderfallen, wirken auch Querkräfte auf die Zugstange 3, die als zusätzliche Biegebeanspruchung zu deren Überlastung führen können. Um diesen durch eine starre Befestigung der Widerlagerplatte an dem Rahmen der Ziehvorrichtung bedingten Nachteilen abzuhelfen, ist die durch die hydraulischen Zylinder 28 bewirkte nachgiebige Lagerung der Widerlagerplatte 6 vorgesehen. Die Widerlagerplatte 6 kann sich damit einer etwaigen Neigung der Erdwand 1 anpassen, ohne daß Biegekräfte auf den in der Zielbaugrube seitlich und gegebenenfalls am gegenüberliegenden Ende abgestützten Rahmen 5 einwirken. Diese Anpassung ist jedoch nicht unbegrenzt möglich, da bei einer zu starken Neigung durch Querkräfte zwischen der Widerlagerplatte 6 und der Erdwand 1 ein Abgleiten der Vorrichtung auftreten kann. Neigungswinkel bis etwa 7° können jedoch ohne weiteres kompensiert werden. Wird dieser Wert überschritten, dann sprechen Endlagenschalter an, die die Vorrichtung abschalten.

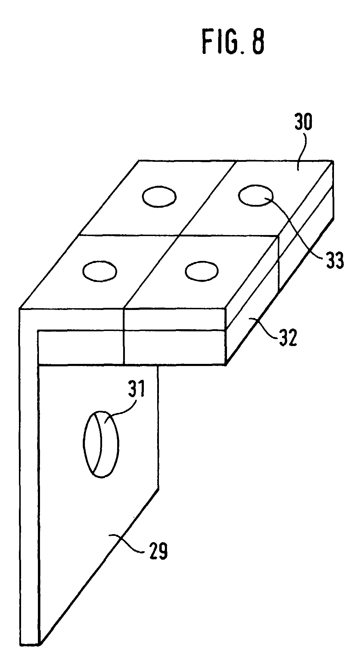

Fig. 8 zeigt eine besondere gekröpfte oder abgewinkelte Widerlagerplatte mit einem an die Erdwand 1 anzulegenden Schenkel 29 und einem hierzu senkrechten Schenkel 30, der parallel zur Erdoberfläche verläuft. Der Schenkel 29 ist mit einem Durchgangsloch 31 für das Zugelement 3 bzw. das herauszuziehende Rohr 2 versehen. Diese Widerlagerplatte dient insbesondere zum Ziehen von Rohren, die nicht sehr tief unterhalb der Erdoberfläche liegen. Hier besteht bei einer flachen Widerlagerplatte die Gefahr, daß die Erde hinter dem oberen Teil der Widerlagerplatte wegbricht (sogen. Grundbruch). Um dieses zu verhindern, ist der horizontale Schenkel 30 vorgesehen. Da die jeweils zu ziehenden Rohre jedoch in unterschiedlichen Tiefen liegen, sind unter dem Schenkel 30 mehrere (in Fig. 8 vier) hydraulisch betätigbare Stempel 32 angeordnet, die senkrecht zum Schenkel 30 ausgefahren werden können und damit den jeweiligen Abstand zwischen dem Schenkel 30 und der Erdoberfläche überbrücken. In dem Schenkel 30 sind entsprechende hydraulische Pressen 33 eingesetzt. Der von den Stempeln 32 auf das Erdreich ausgeübte Druck verhindert das Ausbrechen der Erde. Bei hohen Zugkräften oder stark nachgebendem Erdreich kann der Schenkel 30 noch zusätzlich durch Gewichte belastet werden.

## Patentansprüche

1. Verfahren zum Ziehen eines im Erdreich verlegten und/oder eines im Erdreich zu verlegenden Rohres zu einer unterhalb der Erdoberfläche liegenden, von dieser aus zugänglichen Grube hin, in welcher eine mit einem Zugelement in Eingriff stehende Ziehvorrichtung angeordnet ist, wobei das Zugelement durch das Rohr hindurchgeführt ist und hinter dessen in Ziehrichtung hinterem Ende an diesem angreift oder das Zugelement am in Ziehrichtung vorderen Ende an dem Rohr angreift und mit dem Rohr von der Ziehvorrichtung schrittweise zur Grube hin gezogen wird, derart, daß die Ziehvorrichtung bei jedem Schritt einen Vorwärts- und einen Rückwärtshub ausführt,
**dadurch gekennzeichnet,** daß das Zugelement (3) während des Rückwärtshubes unter einer Spannung gehalten wird, die seiner elastischen Dehnung während des Vorwärtshubes entspricht.

2. Verfahren nach Anspruch 1, dadurch gekennzeichnet, daß das in der Ziehvorrichtung befindliche Ende des Zugelements (3) nach Beendigung des Vorwärtshubes in Ziehrichtung gehalten wird.

3. Verfahren nach Anspruch 1 oder 2, dadurch gekennzeichnet, daß das Rohr (2) in die Grube gezogen und nach Eintritt in die Grube zerkleinert wird.

4. Verfahren nach Anspruch 3, dadurch gekennzeichnet, daß das Rohr (2) nach dem Eintritt in die Grube und vor dem Zerkleinern zentriert wird.

5. Verfahren nach Anspruch 2 oder 3, dadurch gekennzeichnet, daß das Rohr (2) gespalten wird.

6. Verfahren nach Anspruch 2 oder 3, dadurch gekennzeichnet, daß das Rohr (2) zerdrückt wird.

7. Verfahren nach Anspruch 2 oder 3, dadurch gekennzeichnet, daß das Rohr (2) zerschnitten wird.

8. Verfahren nach Anspruch 7, dadurch gekennzeichnet, daß das Rohr (2) während des Vorwärtshubes in Längsrichtung und nach einem oder mehreren Vorwärtshüben in Umfangsrichtung zerschnitten wird.

9. Verfahren nach einem der Ansprüche 1 bis 8, dadurch gekennzeichnet, daß die Ziehvorrichtung den Vorwärts- und Rückwärtshub mit einer von der Belastung abhängigen Geschwindigkeit durchführt.

10. Verfahren nach einem der Ansprüche 1 bis 9, dadurch gekennzeichnet, daß das Zugelement eine aus einzelnen Abschnitten zusammengesetzte Zugstange (3) ist, wobei die Abschnitte durch Schraubmuffen miteinander verbunden sind, und daß die Abschnitte jeweils nach Verlassen der Ziehvorrichtung durch automatisches Abdrehen der Schraubmuffen von der Zugstange (3) getrennt werden.

11. Verfahren nach einem der Ansprüche 1 bis 10, dadurch gekennzeichnet, daß in dem Hohlraum zwischen einem zu verlegenden Rohr und dem Erdreich ein Schmiermittel eingeführt wird.

12. Verfahren nach Anspruch 11, dadurch gekennzeichnet, daß das Schmiermittel zur Stützung des Erdreichs bzw. Stabilisierung der Rohrtrasse unter Druck gehalten wird.

13. Vorrichtung zur Durchführung des Verfahrens nach einem der Ansprüche 1 bis 12 mit einem elastisch dehnbaren Zugelement, das durch das Rohr hindurchgeführt ist und an dessen in Ziehrichtung hinterem Ende mit diesem in in Ziehrichtung wirkendem Eingriff ist oder das mit dem Rohr an dessen in Ziehrichtung vorderem Ende in in Ziehrichtung wirkendem Eingriff ist, einer in der Grube angeordneten Ziehvorrichtung, die mit dem in Ziehrichtung vorderen Ende des Zugelements in in Ziehrichtung wirkendem Eingriff ist, wobei die Ziehvorrichtung eine schrittweise arbeitende Vorrichtung mit einem Vorwärts- und einem Rückwärtshub ist,
**dadurch gekennzeichnet**, daß die Ziehvorrichtung mit einem Zugglied, das während des Vorwärtshubes mit dem Zugelement (3) in Eingriff ist, und einem Halteglied, das während des Rückwärtshubes mit dem Zugelement (3) in Eingriff ist, versehen ist.

14. Vorrichtung nach Anspruch 13, dadurch gekennzeichnet, daß das Zugglied mit einer den Vorwärts- und Rückwärtshub bewirkenden Antriebsvorrichtung verbunden ist.

15. Vorrichtung nach Anspruch 13 oder 14, dadurch gekennzeichnet, daß das Halteglied in Ziehrichtung fest angeordnet ist.

16. Vorrichtung nach einem der Ansprüche 13 bis 15, dadurch gekennzeichnet, daß die den Vorwärts- und Rückwärtshub bewirkende Antriebsvorrichtung eine Hydraulikpumpe ist, deren Förderstrom lastabhängig einstellbar ist.

17. Vorrichtung nach einem der Ansprüche 13 bis 16, dadurch gekennzeichnet, daß das Zugelement (3) in vorgegebenen Abständen mit Rastgliedern (4) versehen ist für den Eingriff mit dem Zugglied (12) und dem Halteglied (17).

18. Vorrichtung nach Anspruch 17, dadurch gekennzeichnet, daß das Zugglied (12) und das Halteglied (17) gabelförmig ausgebildet und in vertikaler Richtung bewegbar sind, wobei sie im Eingriffszustand mit den Rastgliedern (4) zwischen diesen über das Zugelement (3) greifen.

19. Vorrichtung nach einem der Ansprüche 13 bis 16, dadurch gekennzeichnet, daß das Zugglied und das Halteglied Keilklemmvorrichtungen darstellen, die in Abhängigkeit von der Richtung der auf das Zugelement (3) wirkenden Längskräfte in oder außer Eingriff mit diesem sind.

20. Vorrichtung nach Anspruch 19, dadurch gekennzeichnet, daß die Keilklemmvorrichtungen in Richtung auf den Eingriff mit dem Zugelement (3) vorgespannt sind.

21. Vorrichtung nach Anspruch 19 oder 20, dadurch gekennzeichnet, daß die Oberfläche des Zugelements (3) und die mit diesem in Eingriff bringbare Oberfläche der Keilklemmvorrichtungen zur Verstärkung des Eingriffs profiliert sind.

22. Vorrichtung nach einem der Ansprüche 13 bis 21, dadurch gekennzeichnet, daß die Ziehvorrichtung auf der Rohreintrittsseite eine Zentriervorrichtung mit vertikal bewegbaren Klemmzangen (8,9) oberhalb und unterhalb des Rohres (2) aufweist.

23. Vorrichtung nach Anspruch 22, dadurch gekennzeichnet, daß die Klemmzangen (8,9) definierte Einstellpositionen aufweisen.

24. Vorrichtung nach einem der Ansprüche 13 bis 23, dadurch gekennzeichnet, daß das Zugelement eine aus einzelnen, durch Schraubmuffen miteinander verbundenen Stangenabschnitten bestehende Zugstange (3) ist und daß am in Ziehrichtung vorderen Ende der Ziehvorrichtung eine Abdrehvorrichtung (18) mit einem in Drehrichtung antreibbaren Abdrehprisma (19) vorgesehen ist, durch das eine in das Abdrehprisma (19) eingeführte Schraubmuffe von den angrenzenden Stangenabschnitten drehbar ist.

25. Vorrichtung nach einem der Ansprüche 13 bis 24, dadurch gekennzeichnet, daß das Zugglied in Ziehrichtung mit einem Spaltkegel (10) starr gekoppelt ist.

26. Vorrichtung nach einem der Ansprüche 13 bis 24, dadurch gekennzeichnet, daß zwei radial bewegbare Preßbacken vorgesehen sind zum Zerdrücken des in die Grube gezogenen Rohres (2).

27. Vorrichtung nach einem der Ansprüche 13 bis 24, dadurch gekennzeichnet, daß eine Plasmabrenner aufweisende Schneidvorrichtung zum thermischen Zerschneiden des in die Grube gezogenen Rohres vorgesehen ist.

28. Vorrichtung nach Anspruch 27, dadurch gekennzeichnet, daß die Plasmabrenner auf einem in Ziehrichtung stationären Drehkranz angeordnet sind.

29. Vorrichtung nach Anspruch 27 oder 28, dadurch gekennzeichnet, daß die Schneidvorrichtung ein Schutzglied für das Zugelement (3) aufweist.

30. Vorrichtung nach Anspruch 29, dadurch gekennzeichnet, daß das Schutzglied eine in das zu zerschneidende Rohr (2) einführbare, das Zugelement (3) abdeckende keramikbeschichtete Hülse ist.

31. Vorrichtung nach einem der Ansprüche 25 bis 26, dadurch gekennzeichnet, daß eine Spülvorrichtung zum Binden des beim Zerkleinern des in die Grube gezogenen Rohres (2) anfallenden Staubes vorgesehen ist.

32. Vorrichtung nach einem der Ansprüche 13 bis 23 und 26 bis 31, dadurch gekennzeichnet, daß das Zugelement eine Kette, ein Seil oder ein zugfester Schlauch ist.

33. Vorrichtung nach einem der Ansprüche 13 bis 32, dadurch gekennzeichnet, daß zwischen einem im Erdreich verlegten, herauszuziehenden Rohr (2) und einem im Erdreich zu verlegenden, gleichzeitig einzuziehenden Rohr ein Adapter angeordnet ist, der mit dem Zugelement (3) sowie mit dem herausziehenden Rohr (2) und dem einzuziehenden Rohr in in Ziehrichtung wirkendem Eingriff ist.

34. Vorrichtung nach einem der Ansprüche 13 bis 33, dadurch gekennzeichnet, daß in der Grube eine sich an der Erdwand (1), in der das herauszuziehende Rohr (2) mündet, abstützende Widerlagerplatte (6) vorgesehen ist, an welcher sich wiederum die Ziehvorrichtung abstützt, und daß zwischen der Widerlagerplatte (6) und der Ziehvorrichtung Hydraulikzylinder (28) vorgesehen sind zur Kompensation einer Schrägstellung der Widerlagerplatte (6) gegenüber der Senkrechten zur Rohrachse.

35. Vorrichtung nach Anspruch 34, dadurch gekennzeichnet, daß vier Hydraulikzylinder (28) vorgesehen sind für eine horizontale und/oder vertikale Kompensation.

36. Vorrichtung nach Anspruch 34 oder 35, dadurch gekennzeichnet, daß Endlagenschalter zum Erfassen der Überschreitung der maximal zulässigen Schrägstellung vorgesehen sind.

37. Vorrichtung nach einem der Ansprüche 13 bis 36, dadurch gekennzeichnet, daß in der Grube eine sich an der Erdwand (1), in der das herauszuziehende Rohr (2) mündet, abstützende Widerlagerplatte vorgesehen ist, die derart abgewinkel ist, daß sie einen parallel zur Erdoberfläche verlaufenden, auf der Erdwand (1) aufliegenden Schenkel (30) aufweist.

38. Vorrichtung nach Anspruch 37, dadurch gekennzeichnet, daß zum Ausgleich eines Abstandes zwischen dem Schenkel (30) und der Erdoberfläche hydraulische Stempel (32) auf der Unterseite des Schenkels (30) angebracht sind.

39. Vorrichtung nach Anspruch 37 oder 38, dadurch gekennzeichnet, daß der Schenkel (30) durch Gewichte belastet ist.

## Claims

1. Process for pulling a pipe laid in the ground and/or to be laid in the ground towards a pit located below ground and accessible therefrom, in which is configured a pulling mechanism which is engaged with a pulling element, and the pulling element is passed through the pipe and engages it behind its rear end, as seen in the pulling direction, or the pulling element engages the pipe at the front end, as seen in the pulling direction, and is pulled by the pulling mechanism with the pipe step by step towards the pit in such a manner that the pulling mechanism executes a forward and a backward stroke with each step, **characterised in that** the pulling element (3) is during the backward stroke held under a tension which corresponds with its elastic expansion during the forward stroke.

2. Process according to Claim 1, **characterised in that** the end of the pulling element (3) which is located in the pulling mechanism is on completion of the forward stroke held in the pulling direction.

3. Process according to Claim 1 or 2, **characterised in that** the pipe (2) is pulled into the pit and after entry into the pit reduced.

4. Process according to Claim 3, **characterised in that** the pipe (2) is centred after entry into the pit and prior to reduction.

5. Process according to Claim 2 or 3, **characterised in that** the pipe (2) is split.

6. Process according to Claim 2 or 3, **characterised in that** the pipe (2) is crushed.

7. Process according to Claim 2 or 3, **characterised in that** the pipe (2) is cut.

8. Process according to Claim 7, **characterised in that** the pipe (2) is during the forward thrust cut in the longitudinal direction and after one or more forward thrusts cut in the peripheral direction.

9. Process according to one of Claims 1 to 8, **characterised in that** the pulling mechanism carries out the forward and backward stroke at a speed which is dependent on the load.

10. Process according to one of Claims 1 to 9, **characterised in that** the pulling element is a pulling rod (3) which is composed of individual sections, and the sections are joined together by threaded sleeves, and the sections are after leaving the pulling mechanism separated from the pulling rod (3) by automatic turning off of the threaded sleeves.

11. Process according to one of Claims 1 to 10, **characterised in that** lubricants are introduced into the cavity between a pipe to be laid and the ground.

12. Process according to Claim 11, **characterised in that** the lubricant is held under pressure for the purpose of supporting the ground or for stabilising the pipe path.

13. Apparatus for carrying out the process according to one of Claims 1 to 12 with an elastically expandable pulling element which is passed through the pipe and in the pulling direction operationally engaged thereto at its rear end, as seen in the pulling direction, or operationally engaged with the pipe at its front end, as seen in the pulling direction, with a pulling mechanism arranged in the pit which is operationally engaged in the pulling direction to the front end of the pulling element, as seen in the pulling direction, and the pulling mechanism is a mechanism operating step by step with a forward and a backward stroke, **characterised in that** the pulling mechanism is engaged with a pulling member which is during the forward stroke engaged with the pulling element (3), and provided with a support member which is engaged with the pulling element (3) during the backward stroke.

14. Apparatus according to Claim 13, **characterised in that** the pulling member is connected to a drive mechanism which carries out the forward and backward stroke.

15. Apparatus according to Claim 13 or 14, **characterised in that** the support member is fixed in the pulling direction.

16. Apparatus according to one of Claims 13 to 15, **characterised in that** the drive mechanism which carries out the forward and backward stroke is a hydraulic pump the conveying flow of which is load dependently adjustable.

17. Apparatus according to one of Claims 13 to 16, **characterised in that** the pulling element (3) is at predetermined gaps provided with detent members (4) for engagement with the pulling member (12) and the support member (17).

18. Apparatus according to Claim 17, **characterised in that** the pulling member (12) and the support member (17) are forkshaped in design and movable in the vertical direction, and they reach in an engaged state with the detent members (4) between them via the pulling element (3).

19. Apparatus according to one of Claims 13 to 16, **characterised in that** the pulling member and the support member represent wedge clamping devices which are in dependence on the direction of longitudinal loads acting on the pulling element (3) engaged thereto or disengaged therefrom.

20. Apparatus according to Claim 19, **characterised in that** the wedge clamping devices are pretensioned in the direction of engagement with the pulling element (3).

21. Apparatus according to Claim 19 or 20, **characterised in that** the surface of the pulling element (3) and the surface of the wedge clamping devices, which are engageable therewith, are profiled for the purpose of strengthening the engagement.

22. Apparatus according to one of Claims 13 to 21, **characterised in that** the pulling device comprises on the side of pipe entry a centring mechanism with vertically movable clamping jaws (8, 9) above and below the pipe (2).

23. Apparatus according to Claim 22, **characterised in that** the clamping jaws (8, 9) have defined adjustment positions.

24. Apparatus according to one of Claims 13 to 23, **characterised in that** the pulling element is a pulling rod (3) composed of individual rod sections joined together by threaded sleeves, and at the front end of the pulling mechanism, as seen in the pulling direction, is provided a turn-off device (18) with a turn-off prism (19) which is driven in the rotary direction and by means of which a threaded sleeve introduced into the turn-offprism (19) is rotated by adjacent rod sections.

25. Apparatus according to one of Claims 13 to 24, **characterised in that** the pulling element is in the pulling direction rigidly coupled to a slit cone (10).

26. Apparatus according to one of Claims 13 to 24, **characterised in that** two radially movable pressure jaws for crushing the pipe (2) which has been pulled into the pit.

27. Apparatus according to one of Claims 13 to 24, **characterised in that** a cutting device comprising a plasma torch is provided for thermal cutting of the pipe which has been pulled into the pit.

28. Apparatus according to Claim 27, **characterised in that** the plasma torches are arranged on a rotary rim which is stationary in the pulling direction.

29. Apparatus according to Claim 27 or 28, **characterised in that** the cutting mechanism comprises a protective member for the pulling element (3).

30. Apparatus according to Claim 29, **characterised in that** the protective member is a ceramic coated sleeve which is insertible into pipe to be cut (2) and which covers the pulling element (3).

31. Apparatus according to one of Claims 25 to 26, **characterised in that** a flushing device is provided for bonding dust which develops during reduction of the pipe (2) which has been pulled into the pit.

32. Apparatus according to one of Claims 13 to 23 and 26 to 31, **characterised in that** the pulling element is a chain, a rope or a tensile hose.

33. Apparatus according to one of Claims 13 to 32, **characterised in that** between a pipe (2), which has been laid in the ground and which is to be pulled out, and a pipe, which is to be laid in the ground and at the same time to be pulled in, is provided an adapter which is in the pulling direction operationally engaged with both the pulling element (3) and the pipe to be pulled out (2) and the pipe to be pulled in.

34. Apparatus according to one of Claims 13 to 33, **characterised in that** in the pit is provided a resistance pipe (2), which is supported against the ground wall (1) into which the pipe to be pulled out (2) merges and at which the pulling mechanism supports itself, and between the resistance plate (6) and the pulling mechanism are provided hydraulic cylinders (28) for compensation of a slanted position of the resistance plate (6) relative to the vertical relative to the pipe axis.

35. Apparatus according to Claim 34, **characterised in that** four hydraulic cylinders (28) are provided for horizontal and/or vertical compensation.

36. Apparatus according to Claim 34 or 35, **characterised in that** final layer switches are provided to detect any excess in maximum admissible slant position.

37. Apparatus according to one of Claims 13 to 36, **characterised in that** in the pit is provided a resistance plate, which supports itself against the ground wall (1) where the pipe to be pulled out (2) terminates and which is angled in such a manner that it comprises a shank (30) which extends parallel to the ground surface and which is seated on the ground wall (1).

38. Apparatus according to Claim 37, **characterised in that** hydraulic stamps (32) are configured on the bottom side of shank (30) for the purpose of compensating a gap between the shank (30) and the ground surface.

39. Apparatus according to Claim 37 or 38, **characterised in that** the shank (30) is loaded by weights.

## Revendications

1. Procédé de traction d'un tuyau posé dans un terrain et/ou d'un tuyau à poser dans un terrain, jusqu'à une fouille, située au-dessous de la surface du sol et accessible depuis celle-ci, dans laquelle est disposé un dispositif de traction venant en prise avec un élément de traction, l'élément de traction étant introduit dans le tuyau et s'accrochant, sur celle-ci, derrière l'extrémité de ce tuyau qui est située à l'arrière suivant la direction de traction ou bien l'élément de traction s'accrochant sur le tuyau à l'extrémité située à l'avant suivant la direction de traction et étant tiré pas à pas, avec le tuyau, jusqu'à la fouille par le dispositif de traction, de façon telle qu'à chaque pas, le dispositif de traction exécute une course d'avancement et une course de recul,
caractérisé en ce que, pendant la course de recul, l'élément de traction (3) est maintenu sous une contrainte qui correspond à son allongement élastique pendant la course d'avancement.

2. Procédé suivant la revendication 1, caractérisé en ce qu'après la fin de la course d'avancement, l'extrémité de l'élément de traction (3) qui est disposée dans le dispositif de traction est maintenue suivant la direction de traction.

3. Procédé suivant la revendication 1 ou 2, caractérisé en ce que le tuyau (2) est tiré dans la fouille et, après l'entrée dans la fouille, est fragmenté en morceaux.

4. Procédé suivant la revendication 3, caractérisé en ce qu'après l'entrée dans la fouille et avant la fragmentation en morceaux, le tuyau (2) est centré.

5. Procédé suivant la revendication 2 ou 3, caractérisé en ce que le tuyau (2) est fendu.

6. Procédé suivant la revendication 2 ou 3, caractérisé en ce que le tuyau (2) est écrasé.

7. Procédé suivant la revendication 2 ou 3, caractérisé en ce que le tuyau (2) est découpé.

8. Procédé suivant la revendication 7, caractérisé en ce que le tuyau (2) est découpé suivant la direction longitudinale pendant la course d'avancement et suivant la direction circonférentielle après une ou plusieurs courses d'avancement.

9. Procédé suivant l'une des revendications 1 à 8, caractérisé en ce que le dispositif de traction effectue la course d'avancement et la course de recul à une vitesse dépendant de la charge.

10. Procédé suivant l'une des revendications 1 à 9, caractérisé en ce que l'élément de traction est une tige de traction (3) composée de sections élémentaires, les sections étant reliées entre elles au moyen de manchons à visser, et en ce qu'après avoir quitté le dispositif de traction, les sections sont chacune séparées respectivement de la tige de traction (3) au moyen d'un entraînement automatique en rotation des manchons de vissage.

11. Procédé suivant l'une des revendications 1 à 10, caractérisé qu'en ce qu'un agent lubrifiant est introduit dans la cavité existant entre un tuyau à poser et le terrain.

12. Procédé suivant la revendication 11, caractérisé en ce que l'agent lubrifiant est maintenu sous pression afin de soutenir le terrain ou de stabiliser le tracé du tuyau.

13. Dispositif de mise en oeuvre d'un procédé suivant l'une des revendications 1 à 12, comprenant un élément de traction susceptible d'un allongement élastique, qui est introduit dans le tuyau et, à l'extrémité de celui-ci située à l'arrière suivant la direction de traction, est mis en prise avec cette extrémité, cette mise en prise exerçant une action dans la direction de traction, ou qui, à l'extrémité du tuyau située à l'avant suivant la direction de traction, est mis en prise avec ce tuyau, cette mise en prise exerçant une action dans la direction de traction, et un dispositif de traction, disposé dans la fouille, qui est en prise avec l'extrémité de l'élément de traction située à l'avant suivant la direction de traction, cette mise en prise exerçant une action dans la direction de traction, le dispositif de traction étant un dispositif fonctionnant pas à pas comportant une course d'avancement et une course de recul,
caractérisé en ce que le dispositif de traction est pourvu d'un organe de traction, qui est en prise avec l'élément de traction (3) pendant la course d'avancement, et d'un organe de maintien qui est en prise avec l'élément de traction (3) pendant la course de recul.

14. Dispositif suivant la revendication 13, caractérisé en ce que l'organe de traction est relié à un dispositif d'entraînement assurant la course d'avancement et la course de recul.

15. Dispositif suivant la revendication 13 ou 14, caractérisé en ce que l'organe de maintien est disposé fixe suivant la direction de traction.

16. Dispositif suivant l'une des revendications 13 à 15, caractérisé en ce que le dispositif d'entraînement assurant la course d'avancement et la course de recul est une pompe hydraulique dont le débit est réglable en fonction de la charge.

17. Dispositif suivant l'une des revendications 13 à 16, caractérisé en ce que l'élément de traction (3) est pourvu, à des intervalles préfixés, d'organes d'arrêt (4), pour la venue en prise avec l'organe ne de traction (12) et l'organe de maintien (17).

18. Dispositif suivant la revendication 17, caractérisé en ce que l'organe de traction (12) et l'organe de maintien (17) sont réalisés en forme de fourche et peuvent être déplacés suivant la direction verticale, ces organes s'accrochant, dans l'état de venue en prise, avec les organes d'arrêt (4), entre ceux-ci et par-dessus l'élément de traction (3).

19. Dispositif suivant l'une des revendications 13 à 16, caractérisé en ce que l'organe de traction et l'organe de maintien constituent des dispositifs de serrage à coin qui, en fonction du sens des forces longitudinales s'exerçant sur l'élément de traction (3), sont en prise ou hors de prise avec celui-ci.

20. Dispositif suivant la revendication 19, caractérisé en ce que les dispositifs de serrage à coin sont soumis à une précontrainte en direction de la venue en prise avec l'élément de traction (3).

21. Dispositif suivant la revendication 19 ou 20, caractérisé en ce que la surface de l'élément de traction (3) et la surface des dispositifs de serrage à coin qui peut être amenée en prise avec celui-ci présentent une forme profilée en vue de renforcer la venue en prise.

22. Dispositif suivant l'une des revendications 13 à 21, caractérisé en ce que le dispositif de traction comporte, du côté entrée de tuyau, un dispositif de centrage comportant des mâchoires de serrage (8, 9) pouvant être déplacées verticalement et situées au-dessus et au-dessous du tuyau (2).

23. Dispositif suivant la revendication 22, caractérisé en ce que les mâchoires de serrage (8, 9) présentent des positions de réglage définies.

24. Dispositif suivant l'une des revendications 13 à 23, caractérisé en ce que l'élément de traction est une tige de traction (3) constituée de sections de tige élémentaires reliées entre elles au moyen de manchons à visser et en ce qu'à l'extrémité du dispositif de traction qui est située à l'avant dans la direction de traction, il est prévu un dispositif d'entraînement en rotation (18) comportant un bloc prismatique d'entraînement en rotation (19), pouvant être entraîné suivant la direction de rotation, au moyen duquel il est possible de faire tourner un manchon à visser, introduit dans le bloc prismatique d'entraînement en rotation (19), par rapport aux sections de tige adjacentes.

25. Dispositif suivant l'une des revendications 13 à 24, caractérisé en ce que l'organe de traction est accouplé rigidement à un cône à fendre (10) suivant la direction de traction.

26. Dispositif suivant l'une des revendications 13 à 24, caractérisé en ce que deux mâchoires de presse pouvant être déplacées radialement sont prévues pour écraser le tuyau (2) tiré dans la fouille.

27. Dispositif suivant l'une des revendications 13 à 24, caractérisé en ce qu'un dispositif de découpage comportant des brûleurs à plasma est prévu pour le découpage thermique du tuyau tiré dans la fouille.

28. Dispositif suivant la revendication 27, caractérisé en ce que les brûleurs à plasma sont disposés sur une couronne rotative qui est fixe suivant la direction de traction.

29. Dispositif suivant la revendication 27 ou 28, caractérisé en ce que le dispositif de découpage comporte un organe de protection pour l'élément de traction (3).

30. Dispositif suivant la revendication 29, caractérisé en ce que l'organe de protection est un fourreau revêtu de céramique qui peut être introduit dans le tuyau (2) à découper et qui recouvre l'élément de traction (3).

31. Dispositif suivant l'une des revendications 25 à 26, caractérisé en ce qu'un dispositif de pulvérisation est prévu pour fixer la poussière se présentant lors de la fragmentation en morceaux du tuyau (2) tiré dans la fouille.

32. Dispositif suivant l'une des revendications 13 à 23 et 26 à 31, caractérisé en ce que l'élément de traction est une chaîne, un câble ou un tuyau souple résistant à la traction.

33. Dispositif suivant l'une des revendications va 13 à 32, caractérisé en ce qu'il est prévu, disposé entre un tuyau (2) posé dans le terrain et à extraire et un tuyau à poser dans le terrain et à tirer simultanément à l'intérieur, un adaptateur qui est en prise avec l'élément de traction (3) et avec le tuyau à extraire (2) et le tuyau à tirer à l'intérieur, la venue en prise s'exerçant dans la direction de traction.

34. Dispositif suivant l'une des revendications 13 à 33, caractérisé en ce que, dans la fouille, il est prévu une plaque d'appui (6) qui prend appui sur la paroi de terrain (1) dans laquelle le tuyau à extraire (2) débouche, plaque d'appui sur laquelle s'appuie à son tour le dispositif de traction, et en ce qu'entre la plaque d'appui (6) et le dispositif de traction, il est prévu des vérins hydrauliques (28) servant à compenser une position inclinée de la plaque d'appui (6) vis-à-vis de l'orientation perpendiculaire par rapport à l'axe du tuyau.

35. Dispositif suivant la revendication 34, caractérisé en ce que quatre vérins hydrauliques (28) sont prévus pour une compensation horizontale et/ou verticale.

36. Dispositif suivant la revendication 34 ou 35, caractérisé en ce que des interrupteurs de fin de course sont prévus pour détecter le dépassement de la position inclinée maximale admissible.

37. Dispositif suivant l'une des revendications 13 à 36, caractérisé en ce que, dans la fouille, il est prévu une plaque d'appui qui prend appui sur la paroi de terrain (1) dans laquelle le tuyau à extraire (2) débouche ; laquelle plaque d'appui est coudée de façon à comporter une aile (30) s'étendant parallèlement à la surface du sol, appliquée sur la paroi de terrain (1).

38. Dispositif suivant la revendication 37, caractérisé en ce que des poinçons hydrauliques (32) sont montés sur la face inférieure de l'aile (30) pour compenser un intervalle entre l'aile (30) et la surface du sol.

39. Dispositif suivant la revendication 37 ou 38, caractérisé en ce que l'aile (30) est chargée au moyen de poids.
